# EUROPEAN PATENT APPLICATION

(11) **EP 4 657 648 A1**
(43) Date of publication of application: **03.12.2025**
(21) Application number: 24846008.1
(22) Date of filing: 23.07.2024
(51) Int. Cl.: H01M 50/60, H01M 50/186, H01M 50/107

(54) **O-RING FOR PREVENTING LEAKAGE OF ELECTROLYTE**

(30) Priority: 24.07.2023 KR 20230096275; 12.07.2024 KR 20240092210
(71) Applicant: LG Energy Solution, Ltd., Seoul 07335 (KR)
(72) Inventor: KWON, Yong-Hwan, Daejeon 34122 (KR); PARK, Chan-Hyeok, Daejeon 34122 (KR); LEE, Ja-Sool, Daejeon 34122 (KR); KIM, Do-Gyun, Daejeon 34122 (KR)
(74) Representative: Goddar, Heinz J.
(86) International application number: PCT/KR2024/010623
(87) International publication number: WO 2025/023706

(57) **Abstract**

An O-ring according to an embodiment of the present disclosure includes a first part seated on a beading portion into which a battery housing is recessed inward and a second part provided above the first part and configured to cover a top end surface of the battery housing.

## Description

### TECHNICAL FIELD

The present disclosure relates to an electrolyte leakage prevention O-ring.

This application is based on and claims priority from Korean Patent Application No. 10-2023-0096275, filed on July 24, 2023, with the Korean Intellectual Property Office, the disclosure of which is incorporated herein in its entirety by reference.

This application is based on and claims priority from Korean Patent Application No. 10-2024-0092210, filed on July 12, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to form a battery pack. Additionally, depending on the charging and discharging capacity required for the battery pack, a plurality of battery cells may be connected in parallel to form a battery pack. Thus, the number of battery cells included in the battery pack may be variously set according to the required output voltage and/or the demanded charging and discharging capacity.

Meanwhile, when manufacturing a cylindrical secondary battery, the electrode assembly is inserted into the battery housing and then an electrolyte injection process is performed for activation. At this time, an O-ring is installed to prevent the electrolyte from leaking to the outside of the battery housing when the electrolyte is injected, and in the case of the conventional O-ring, there was a problem that the electrolyte leakage phenomenon occurred due to a deterioration in leakage performance caused by contact with the battery housing.

### DISCLOSURE

### Technical Problem

The present disclosure is designed to solve the problems of the related art, and therefore the present disclosure is directed to providing an O-ring capable of preventing the electrolyte from leaking to the outside of the battery housing when the electrolyte is injected into a cylindrical battery cell.

More specifically, the present disclosure is directed to improving the sealing properties by expanding the contact area between the battery housing and the O-ring.

However, technical problems to be solved by the present disclosure are not limited to the above-described problems, and other problems not mentioned herein may be clearly understood by those skilled in the art from the following description of the present disclosure.

### Technical Solution

An O-ring according to an embodiment of the present disclosure for solving the above-described problem includes a first part seated on a beading portion into which a battery housing is recessed inward; and a second part provided above the first part and configured to cover a top end surface of the battery housing.

In one aspect of the present disclosure, the first part may be configured in a cylindrical shape.

In another aspect of the present disclosure, the O-ring may have elasticity.

Preferably, the O-ring may include at least one of NBR, VMQ, FKM, and FPM.

In still another aspect of the present disclosure, the O-ring may include an injection hole perforated in an upward and downward direction in the center.

In one aspect of the present disclosure, the O-ring may have a groove into which a hopper capable of pressing the O-ring may be fitted.

In another aspect of the present disclosure, the outer surface of the first part may be configured to be spaced apart from the inner surface of the battery housing by a predetermined distance.

Preferably, the outer surface of the first part may be configured to be spaced apart from the inner surface of the battery housing by 0.2 to 0.8 mm.

In still another aspect of the present disclosure, the bottom surface of the second part may be configured to be spaced apart from the top end surface of the battery housing by a predetermined distance.

In one aspect of the present disclosure, the O-ring may include a pressing surface provided on the inside or the outside of the O-ring and configured to be pressed downward by the hopper.

Preferably, when the pressing surface is pressed downward, the first part may be configured to increase in width in a radial direction as it is compressed in an upward and downward direction.

In another aspect of the present disclosure, when the pressing surface is pressed downward, the second part may be configured to move downward and contact the top end surface of the battery housing.

In still another aspect of the present disclosure, when pressure is applied from the outside of the battery housing toward the beading portion of the battery housing, the O-ring may be configured to block the outside and the inside of the battery housing.

In still another aspect of the present disclosure, the thickness of the first part may repeatedly increase and decrease in an alternating manner along the circumferential direction.

### Advantageous Effects

According to the present disclosure, it is possible to prevent the electrolyte from leaking to the outside of the battery housing when the electrolyte is injected into a cylindrical battery cell.

Additionally, according to the present disclosure, it is possible to expand the contact area between the battery housing and the O-ring.

Accordingly, according to the present disclosure, it is possible to improve the sealing performance of the battery cell when the electrolyte is injected.

However, the effects to be obtained by the present disclosure are not limited to the above-described effects, and other technical effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery cell according to an embodiment of the present disclosure.
FIG. 2 is a cross-sectional perspective view of FIG. 1.
FIG. 3 is a cross-sectional view of the battery cell of FIG. 1.
FIG. 4 is a view for describing a conventional O-ring.
FIG. 5 is a view for describing a state of a conventional O-ring before it is compressed.
FIG. 6 is a view for describing a state of a conventional O-ring after it is compressed.
FIG. 7 is a view for describing an O-ring according to an embodiment of the present disclosure.
FIG. 8 is a view for describing a state of the O-ring of FIG. 7 before it is compressed.
FIG. 9 is an enlarged view of a portion of FIG. 8.
FIG. 10 is a view for describing a state of the O-ring of FIG. 7 after it is compressed.
FIG. 11 is a view for describing an O-ring according to another embodiment of the present disclosure.
FIG. 12 is a view for describing an O-ring according to still another embodiment of the present disclosure.
FIG. 13 is a view for describing an O-ring according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Additionally, to help understanding of the present disclosure, the accompanying drawings are not drawn to actual scale, but dimensions of some components may be exaggerated. Additionally, the same reference numerals may be assigned to the same component in different embodiments.

A statement that two objects of comparison are identical means 'substantially identical'. Therefore, 'substantially identical' may include deviations considered to be low in the art, for example, deviations within 5%. Additionally, uniformity of a certain parameter in a predetermined region may mean that it is uniform in terms of an average.

Although the first, second, and the like are used to describe various components, these components are not limited by these terms, of course. These terms are used only to distinguish one component from another component, and unless otherwise stated, it is obvious that the first component may be the second component.

As used herein, unless otherwise stated to the contrary, each component may be singular or plural.

Placing any component on the "upper (or lower)" of a component or "top (or bottom)" of a component may mean not only that any component is disposed in contact with the top surface (or bottom surface) of the component, but also that other components may be interposed between the component and any component disposed above (or below) the component.

Additionally, when it is described that a component is "linked", "coupled", or "connected" to another component, the components may be directly linked or connected to each other, but it should be understood that still another component may be "interposed" between each component, or each component may be "linked", "coupled", or "connected" through still another component.

As used herein, when referring to "A and/or B", it means A, B or A and B, unless expressly stated to the contrary, and when referring to "C to D", it means C or more and D or less, unless expressly stated to the contrary.

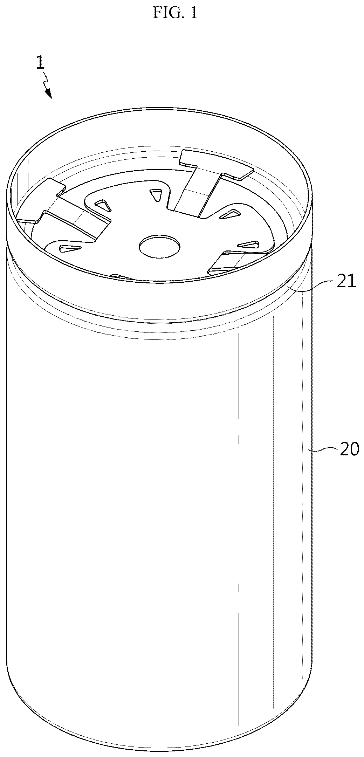

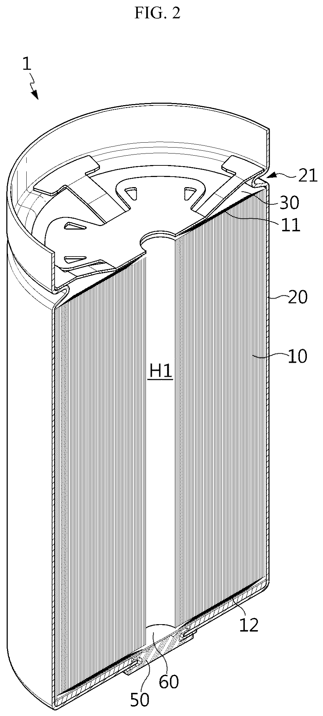

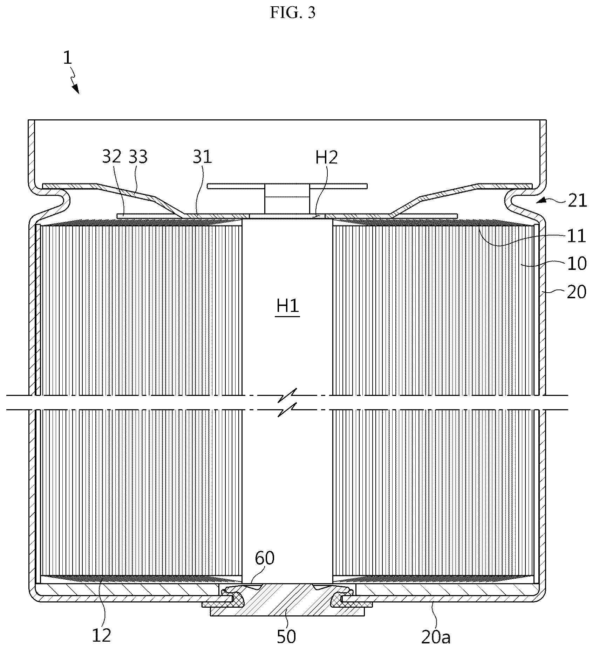

FIG. 1 is a view for describing a battery cell 1 according to an embodiment of the present disclosure, and FIG. 2 is a cross-sectional perspective view of FIG. 1. FIG. 3 is a cross-sectional view of the battery cell 1 of FIG. 1.

Referring to FIG. 1, a battery cell 1 according to an embodiment of the present disclosure includes an electrode assembly 10, a battery housing 20, and a current collector 30. The battery cell 1 may, in addition thereto, further include a housing cover 40 and/or a terminal 50 and/or a second current collector 60. The present disclosure is not limited by the shape of the battery, and may be applied to batteries of other shapes, such as prismatic batteries.

The electrode assembly 10 includes a first uncoated portion 11 and a second uncoated portion 12. More specifically, the electrode assembly 10 has a structure in which a first electrode and a second electrode and a separator interposed therebetween are wound around a winding axis to define a core and an outer circumferential surface. That is, the electrode assembly 10 applied to the present disclosure may be a jelly-roll type electrode assembly 10. The electrode assembly 10 may be wound around the winding center hole H1. In this case, an additional separator may be provided on the outer circumferential surface of the electrode assembly 10 for insulation from the battery housing 20. The electrode assembly 10 may have a winding structure well known in the art, without limitation. Meanwhile, in the present disclosure, the positive electrode active material coated on the positive electrode plate and the negative electrode active material coated on the negative electrode plate may be used without limitation as long as they are active materials known in the art.

Referring to FIG. 1, the battery housing 20 is a roughly cylindrical receiving container with an opening formed on one side, and is made of a conductive metal material. The side surface of the battery housing 20 and the bottom surface located on the opposite side of the opening are generally formed integrally. That is, the battery housing 20 generally has an open top end in the height direction and a closed bottom end. The bottom surface of the battery housing 20 may have a roughly flat shape. The bottom surface of the battery housing 20 may constitute an outer surface 20a of the closure. In this case, the outer surface 20a of the closure may function as a second electrode terminal.

The battery housing 20 accommodates the electrode assembly 10 through an opening formed on one side in the height direction. The battery housing 20 may also accommodate an electrolyte through the opening. The top end surface 25 of the battery housing 20 constituting the opening may be bent in the horizontal direction by a crimping process after the electrolyte is injected later.

The battery housing 20 may include a beading portion 21 formed at an end portion adjacent to an opening provided at the top end of the battery housing 20. The battery housing 20 may further include a crimping portion 22 formed on the beading portion 21. The beading portion 21 has a shape in which the circumference of the outer circumferential surface of the battery housing 20 is recessed to a predetermined depth. More specifically, the beading portion 21 may have a shape in which it is recessed inward in a region between an opening formed at one side of the battery housing 20 and a receiving portion accommodating the electrode assembly 10.

The beading portion 21 may provide a support surface on which at least a portion of the edge circumference of the current collector 30 to be described later may be seated and coupled. That is, at least a portion of the edge circumference of the current collector 30 of the present disclosure and/or the edge circumference of the housing cover 40 may be seated on the top surface of the beading portion 21. In order to stably support at least a portion of the edge circumference of the current collector 30, the top surface of the beading portion 21 may have a shape extending along a direction approximately parallel to the bottom surface of the battery housing 20, that is, along a direction approximately perpendicular to the side wall of the battery housing 20.

Referring to FIGS. 1 to 3, the current collector 30 according to an embodiment of the present disclosure is accommodated inside the battery housing 20, is electrically connected to the electrode assembly 10, and is also electrically connected to the battery housing 20. That is, the current collector 30 electrically connects the electrode assembly 10 and the battery housing 20. The current collector 30 includes a support portion 31 located on one surface of the electrode assembly 10, a tab coupling portion 32 extending from the support portion 31 and coupled to the first uncoated portion 11, and a housing coupling portion 33 extending from the support portion 31 and coupled to an inner surface of the battery housing 20. The current collector 30 may include a current collector hole H2 for injecting an electrolyte in the center.

The housing coupling portion 33 may include a contact portion 33a coupled to the inner surface of the battery housing 20 and a connecting portion 33b connecting the support portion 31 and the contact portion 33a. In one aspect of the present disclosure, the tab coupling portion 32 may have a greater width than the connecting portion 33b. In another aspect of the present disclosure, the contact portion 33a may have a greater width than the connecting portion 33b.

The contact portion 33a is coupled to the inner surface of the battery housing 20. Preferably, the contact portion 33a may be coupled to the beading portion 21 of the battery housing 20. In this case, for stable contact and coupling, both the beading portion 21 and the contact portion 33a may have a shape extending along a direction approximately parallel to the bottom surface of the battery housing 20, that is, along a direction approximately perpendicular to the side wall of the battery housing 20.

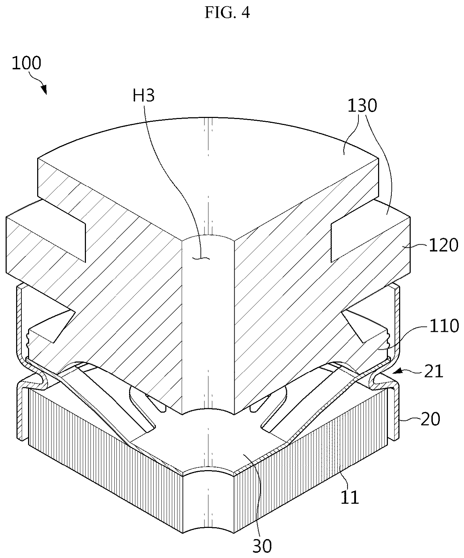

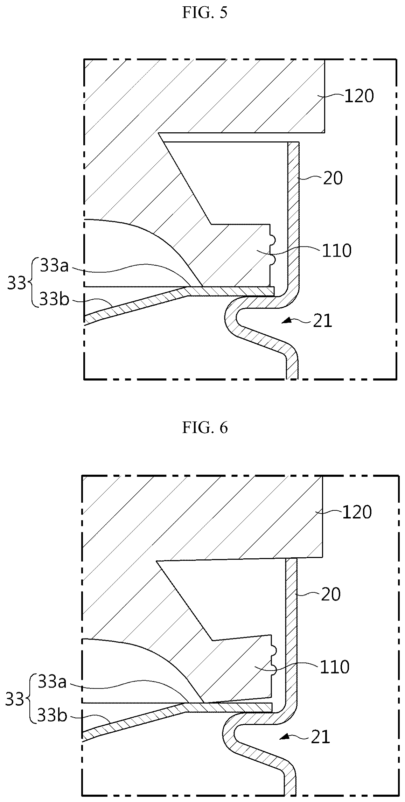

FIG. 4 is a view for describing a conventional O-ring 100. FIG. 5 is a view for describing a state of a conventional O-ring 100 before it is compressed, and FIG. 6 is a view for describing a state of a conventional O-ring 100 after it is compressed.

In general, the battery housing 20 of the cylindrical battery cell undergoes an electrolyte injection process for activation after inserting the electrode assembly 10. At this time, an O-ring 100 is installed to prevent the electrolyte from leaking to the outside of the battery housing 20 when the electrolyte is injected, and in the case of the conventional O-ring 100, electrolyte leakage phenomenon occurred due to a deterioration in the sealing performance, such as the electrolyte leakage caused by contact with the battery housing 20.

For example, the conventional O-ring 100 is disposed on the contact portion 33a of the housing coupling portion 33 that is seated on the beading portion 21. In this case, when the O-ring 100 is compressed in the height direction of the battery cell, that is, in the winding axis direction of the electrode assembly 10, the shape of the O-ring 100 is deformed by elasticity. For example, when the O-ring 100 is pressed downward while seated on the beading portion 21 as shown in FIG. 5, the O-ring 100 is compressed in an upward and downward direction as shown in FIG. 6, and its shape is deformed. As a result, as shown in FIG. 6, the area where the O-ring 100 is in contact with the current collector 30 and/or the battery housing 20 is reduced. That is, since the O-ring 100 is in a state of line contact with the current collector 30 and/or the battery housing 20 after being compressed, the battery housing 20 cannot be completely sealed. Accordingly, a problem of electrolyte leakage to the outside when the electrolyte is injected is highly likely to occur.

More specifically, referring to FIGS. 4 to 6, in the conventional O-ring 100, the first part 110 has a shape in which a leg extends, rather than a cylindrical shape. In this case, when the O-ring 100 is pressed in an upward and downward direction, the leg portion of the first part 110 is lifted upward, and the current collector 30 and/or the battery housing 20 and the first part 110 come into line contact. Accordingly, the battery housing 20 cannot be completely sealed, and a problem of electrolyte leakage to the outside when the electrolyte is injected is highly likely to occur. That is, in the structure of the conventional O-ring 100, as a downward force is applied by the hopper H, the bottom surface contacts the top surface of the beading portion 21 of the battery housing 20, and then the side surface of the O-ring 100 is lifted to seal the side surface of the battery housing 20. According to this structure, the O-ring 100 and the battery housing 20 maintain sealing through line contact, so that the sealing effect is not sufficient.

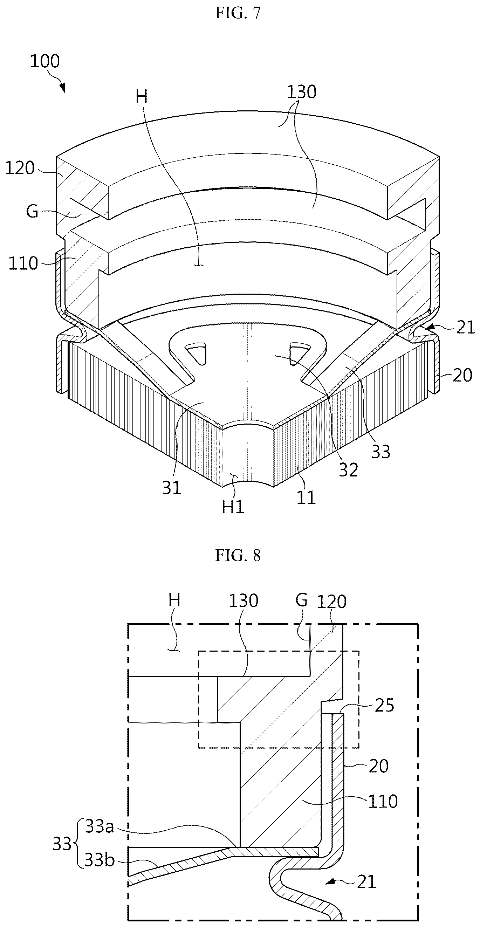

Therefore, the inventor of the present disclosure has derived an O-ring 100 structure for improving the sealing performance by expanding the contact area between the battery housing 20 and the O-ring 100 compared to the conventional O-ring 100. That is, the present disclosure relates to an O-ring 100 structure capable of preventing electrolyte leakage when an electrolyte is injected into a cylindrical battery cell. This will be described in detail with reference to FIGS. 7 to 10 below.

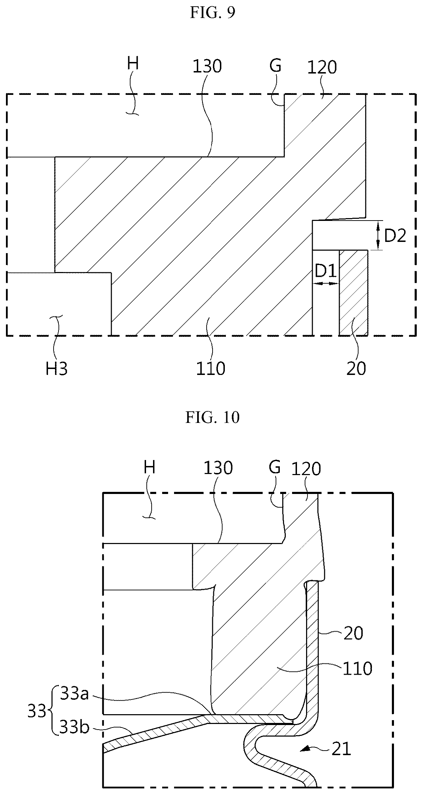

FIG. 7 is a view for describing an O-ring 100 according to an embodiment of the present disclosure. FIG. 8 is a view for describing a state of the O-ring 100 of FIG. 7 before it is compressed, and FIG. 9 is an enlarged view of a portion of FIG. 8. FIG. 10 is a view for describing a state of the O-ring 100 of FIG. 7 after it is compressed.

Referring to FIG. 7, the O-ring 100 includes a first part 110 and a second part 120. The O-ring 100 may further include a pressing surface 130. More specifically, the O-ring 100 may include a first part 110 seated on a beading portion 21 into which a battery housing 20 is recessed inward; and a second part 120 provided above the first part 110 and configured to cover a top end surface 25 of the battery housing 20. The first part 110 and the second part 120 may be formed integrally. The O-ring 100 may be applied to a state before a crimping process is performed after the beading portion 21 is formed in the battery cell. That is, the O-ring 100 may be used in a state where the top is not closed by the housing cover after the beading portion 21 is formed in the battery cell. That is, the O-ring 100 may be applied in a state where the top of the battery cell is open.

The first part 110 may be configured, for example, in an approximately cylindrical shape. That is, since the first part 110 is seated on the beading portion 21 of the cylindrical battery cell, it is preferable to have a shape approximately similar to that of the battery housing 20. Therefore, it is preferable that the first part 110 has an approximately cylindrical shape.

According to this structure, surface contact between the O-ring 100 and the battery housing 20 is possible, so that the contact area may be expanded. That is, according to the structure of the present disclosure as described above, when the O-ring 100 is compressed in the total elevation direction, most of the area where the battery housing 20 and the O-ring 100 contact may come into contact in the form of surface contact, thereby effectively preventing the electrolyte from leaking to the outside of the battery housing 20 when the electrolyte is injected.

Meanwhile, the second part 120 is provided above the first part 110 and should be able to cover the top surface 25 of the battery housing 20, so that it may be configured in a roughly cylindrical shape in the same manner. More specifically, the second part 120 may have a shape extending further in the horizontal direction from the first part 110. Therefore, the second part 120 may be configured in a cylindrical shape with a larger radius than the first part 110. However, the shape of the second part 120 is not limited to a cylindrical shape, and any shape that protrudes outward in the radial direction further than the first part 110 to cover the top surface 25 of the battery housing 20 will be said to be included in the scope of the present disclosure.

Preferably, the outer surface of the first part 110 may be configured in a cylindrical shape having a roughly constant radius. In this case, it is preferable that the distance from the center of the first part 110 to the outer surface of the first part 110 is smaller than or equal to the inner diameter of the battery housing 20. If the distance from the center of the first part 110 to the outer surface of the first part 110 is greater than the inner diameter of the battery housing 20, the first part 110 cannot be smoothly inserted into the inner side of the battery housing 20.

In one aspect of the present disclosure, the O-ring 100 may be configured to have elasticity. That is, the O-ring 100 may be configured such that its shape is deformed by external pressure. For example, the O-ring 100 may include at least one of NBR, VMQ, FKM, and FPM.

According to this configuration, when the O-ring 100 is inserted into the battery housing 20 and then compressed in one direction, the shape of the O-ring 100 may be deformed to seal the battery housing 20. For example, when the O-ring 100 is compressed in an upward and downward direction, the thickness of the O-ring 100 in the horizontal direction may increase. Accordingly, the gap in the horizontal direction existing between the O-ring 100 and the battery housing 20 may be filled by the deformation of the O-ring 100. In this way, according to the elastic properties of the O-ring 100, the sealing performance may be improved, thereby effectively preventing the electrolyte leakage. Additionally, the internal pressure of the battery housing 20 may be maintained or controlled smoothly.

In another aspect of the present disclosure, the O-ring 100 may include an injection hole H3 perforated in an upward and downward direction in the center. Through the injection hole H3, the electrolyte may be injected into the battery housing 20.

According to the above structure, when the O-ring 100 is inserted into the battery housing 20 and then compressed in an upward and downward direction, the O-ring 100 and the inner surface of the battery housing 20 are in surface contact with each other, thereby improving the sealing performance. Therefore, the electrolyte leakage may be prevented when the electrolyte is injected. Additionally, since the sealing performance between the O-ring 100 and the battery housing 20 is secured, the internal pressure of the battery housing 20 may be controlled stably.

In one aspect of the present disclosure, the O-ring 100 may have a groove G into which a hopper H capable of pressing the O-ring 100 may be fitted. That is, the O-ring 100 and the hopper H may be configured to be detachable.

Referring to FIG. 7 again, a hopper H capable of pressing the O-ring 100 may be inserted into the inside of the O-ring 100. The hopper H may be configured to press at least a portion of the O-ring 100. For example, referring to FIG. 7, the hopper H may be inserted into the groove G provided inside the O-ring 100, and the hopper H may be configured to press the pressing surface 130 of the O-ring 100. Accordingly, the O-ring 100 may be pressed in the winding axis direction of the electrode assembly 10. More specifically, the O-ring 100 may be pressed downward.

According to the above structure, the replacement of the O-ring 100 is facilitated. That is, the O-ring 100 may be subject to frequent damage on the surface in contact with the battery housing 20 due to repeated compression. In this case, according to the structure of the present disclosure as described above, the groove G is provided in at least a portion of the O-ring 100 to make the hopper H detachable, so that only the O-ring 100 may be easily replaced. Furthermore, when the groove G is provided inside the O-ring 100 to mount the hopper H inside the O-ring 100, the hopper H may occupy most of the internal space of the O-ring 100, thereby reducing the cost of materials required for manufacturing the O-ring 100.

In another aspect of the present disclosure, the outer surface of the first part 110 may be configured to be spaced apart from the inner surface of the battery housing 20 by a predetermined distance.

For example, referring to FIG. 8, the outer surface of the first part 110 may be spaced apart from the inner surface of the battery housing 20 by a predetermined distance. More specifically, the outer surface of the first part 110 and the inner surface of the battery housing 20 may be spaced apart from each other by a predetermined distance in the radial direction. For example, when the outer diameter of the battery housing 20 is about 46 mm and the inner diameter is about 45 mm, the outer surface of the first part 110 may be configured to be spaced apart from the inner surface of the battery housing 20 by about 0.2 to 0.8 mm. If the distance D1 between the outer surface of the first part 110 and the inner surface of the battery housing 20 is smaller than about 0.2 mm, the process of inserting the O-ring 100 into the battery housing 20 may not be smooth. In another aspect, if the distance D1 between the outer surface of the first part 110 and the inner surface of the battery housing 20 is greater than about 0.8 mm, surface contact for sealing may not be made when the O-ring 100 is compressed. Therefore, the outer surface of the first part 110 is preferably configured to be spaced apart from the inner surface of the battery housing 20 by about 0.2 to 0.8 mm, and more preferably by about 0.5 to 0.7 mm. For example, as an example, the outer surface of the first part 110 may be configured to be spaced apart from the inner surface of the battery housing 20 by about 0.6 mm. On the other hand, the present disclosure is not limited to the above absolute figures, and it will be said that the relative figures converted in relation to the size of the battery housing 20 are included in the scope of the present disclosure.

According to the above structure, the O-ring 100 may be smoothly inserted into the battery housing 20. Additionally, when the O-ring 100 is compressed in one direction after being inserted, the shape of the O-ring 100 may be deformed to contact the inner surface of the battery housing 20, thereby effectively sealing the battery housing 20.

In still another aspect of the present disclosure, the bottom surface of the second part 120 may be configured to be spaced apart from the top end surface 25 of the battery housing 20 by a predetermined distance.

For example, referring to FIG. 8, the bottom surface of the second part 120 may be spaced apart from the top end surface 25 of the battery housing 20 by a predetermined distance. More specifically, the bottom surface of the second part 120 and the top end surface 25 of the battery housing 20 may be spaced apart from each other by a predetermined distance in the radial direction. For example, when the outer diameter of the battery housing 20 is about 46 mm and the inner diameter is about 45 mm, the bottom surface of the second part 120 may be configured to be spaced apart from the top end surface 25 of the battery housing 20 by about 0.2 to 0.8 mm. If the distance D2 between the bottom surface of the second part 120 and the top end surface 25 of the battery housing 20 is smaller than about 0.2 mm, the possibility of damage to the bottom surface of the second part 120 may increase when contact between the top end surface 25 of the battery housing 20 and the bottom surface of the second part 120 is repeated due to repeated compression of the O-ring 100. In another aspect, if the distance D2 between the bottom surface of the second part 120 and the top end surface 25 of the battery housing 20 is greater than about 0.8 mm, surface contact for sealing may not be made when the O-ring 100 is compressed. Therefore, the bottom surface of the second part 120 is preferably configured to be spaced apart from the top end surface 25 of the battery housing 20 by about 0.2 to 0.8 mm, and more preferably by about 0.5 to 0.7 mm. For example, as an example, the bottom surface of the second part 120 may be configured to be spaced apart from the top end surface 25 of the battery housing 20 by about 0.6 mm. On the other hand, the present disclosure is not limited to the above absolute figures, and it will be said that the relative figures converted in relation to the size of the battery housing 20 are included in the scope of the present disclosure.

According to the above structure, when the O-ring 100 is compressed, the shape of the O-ring 100 may be deformed to allow the second part 120 to contact the top end surface 25 of the battery housing 20, thereby further sealing the battery housing 20.

In still another aspect of the present disclosure, the outer diameter of the second part 120 may be the same as the outer diameter of the battery housing 20.

For example, referring to FIG. 9, the outer surface of the battery housing 20 and the outer surface of the second part 120 may be configured to have substantially similar diameters. According to this configuration, the outer diameters of the battery housing 20 and the O-ring 100 are similar, and thus even if contact between the top end surface 25 of the battery housing 20 and the bottom surface of the second part 120 is repeated, the possibility of damage to the bottom surface of the second part 120 may be reduced by deforming the end of the O-ring 100.

For example, in the conventional O-ring 100, since the outer diameter of the second part 120 is larger than the outer diameter of the battery housing 20, it is highly likely that the point where the second part 120 contacts the top end surface 25 of the battery housing 20 will be damaged by being dug inward if contact between the top end surface 25 of the battery housing 20 and the bottom surface of the second part 120 is repeated, but according to the structure of the present disclosure as described above, since the outer diameters of the battery housing 20 and the O-ring 100 are similar, the phenomenon of being dug inward may be prevented even if the point where the second part 120 contacts the top end surface 25 of the battery housing 20 is deformed upward.

In one aspect of the present disclosure, the O-ring 100 may include a pressing surface 130 provided on at least a portion of the O-ring 100 and configured to be pressed downward by the hopper H. For example, the O-ring 100 may include a pressing surface 130 provided on the inside or outside of the O-ring 100 and configured to be pressed downward by the hopper H.

For example, referring to FIG. 7, the pressing surface 130 may be configured to press the O-ring 100 downward. For example, among the surfaces forming the groove G provided inside the O-ring 100, a surface facing upward may correspond to the pressing surface 130. That is, among the surfaces forming the groove G provided inside the O-ring 100, the surface facing upward is in contact with the bottom surface of the hopper H, and thus the surface pressed by the bottom surface of the hopper H may correspond to the pressing surface 130 of the O-ring 100. Alternatively, the top surface of the O-ring 100 shown in FIG. 7 may also correspond to the pressing surface 130. For example, the hopper H may be fitted into the groove G provided inside the O-ring 100, but the top surface of the O-ring 100 may also be shaped to press together. That is, in the O-ring 100 shown in the embodiment of FIG. 7, the surface facing upward among the surfaces forming the groove G provided inside the O-ring 100 and the top surface of the O-ring 100 may correspond to the pressing surface 130.

In another aspect of the present disclosure, when the pressing surface 130 is pressed downward, the first part 110 may be configured to increase in width in a radial direction as it is compressed in an upward and downward direction. That is, when pressure is applied from the outside of the battery housing 20 toward the beading portion 21 of the battery housing 20, the first part 110 may be configured to contact the inner surface of the battery housing 20.

In this case, it is preferable that the contact pressure between the outer surface of the first part 110 and the inner surface of the battery housing 20 is greater than the electrolyte injection pressure in order to reliably prevent leakage. For example, when the electrolyte injection pressure is about 8 bar, the contact pressure between the outer surface of the first part 110 and the inner surface of the battery housing 20 should be greater than about 8 bar to maintain sealing.

In still another aspect of the present disclosure, when the pressing surface 130 is pressed downward, the second part 120 may be configured to move downward and contact the top end surface 25 of the battery housing 20. That is, when pressure is applied from the outside of the battery housing 20 toward the beading portion 21 of the battery housing 20, the second part 120 may be configured to contact the top end surface 25 of the battery housing 20.

According to the above configuration, a primary sealing by sealing between the outer surface of the first part 110 and the inner surface of the battery housing 20, and a secondary sealing between the bottom surface of the second part 120 and the top end surface 25 of the battery housing 20 are possible.

In this case, it is preferable that the contact pressure between the bottom surface of the second part 120 and the top end surface 25 of the battery housing 20 is greater than the electrolyte injection pressure in order to reliably prevent leakage. For example, when the electrolyte injection pressure is about 8 bar, the secondary sealing effect may be achieved if the contact pressure between the bottom surface of the second part 120 and the top end surface 25 of the battery housing 20 is greater than about 8 bar.

That is, according to the above configuration, when pressure is applied from the outside of the battery housing 20 toward the beading portion 21 of the battery housing 20, the O-ring 100 may be configured to block the outside and the inside of the battery housing 20. Accordingly, the sealing performance of the battery housing 20 may be improved, and the electrolyte leakage may be effectively prevented. Additionally, the internal pressure of the battery housing 20 may be maintained or controlled smoothly.

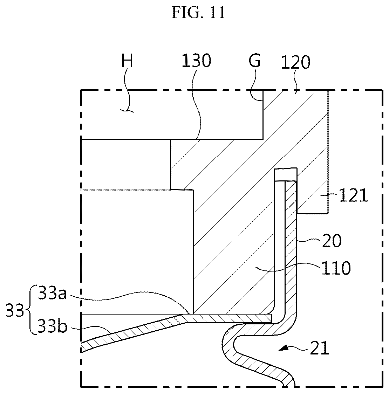

FIG. 11 is a view for describing an O-ring 100 according to another embodiment of the present disclosure.

Since the O-ring 100 according to this embodiment is similar to the O-ring 100 of the previous embodiment, redundant descriptions of configurations that are substantially the same as or similar to the previous embodiment will be omitted, and the following description will focus on differences from the previous embodiment.

Referring to FIG. 11, the second part 120 of the O-ring 100 may further include an extended cover portion 121. The extended cover portion 121 may extend downward from the second part 120 and may be configured to cover the outer surface of the top end surface 25 of the battery housing 20. The extended cover portion 121 may be configured to contact the outer surface of the battery housing 20. The end surface of the extended cover portion 121 may be configured to be parallel to the horizontal direction.

According to the above configuration, in addition to the primary sealing by sealing between the outer surface of the first part 110 and the inner surface of the battery housing 20 and the secondary sealing between the bottom surface of the second part 120 and the top end surface 25 of the battery housing 20, a tertiary sealing between the inner surface of the extended cover portion 121 and the outer surface of the battery housing 20 is possible. That is, the sealing force may be further secured. In this case, it is preferable that the contact pressure between the inner surface of the extended cover portion 121 and the outer surface of the battery housing 20 is greater than the injection pressure of the electrolyte.

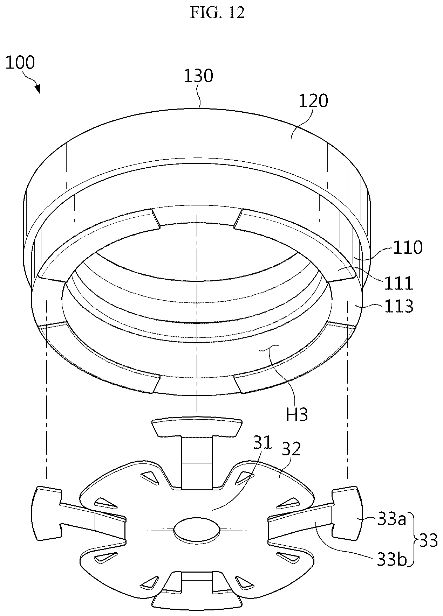

FIG. 12 is a view for describing an O-ring 100 according to still another embodiment of the present disclosure.

Since the O-ring 100 according to this embodiment is similar to the O-ring 100 of the previous embodiment, redundant descriptions of configurations that are substantially the same as or similar to the previous embodiment will be omitted, and the following description will focus on differences from the previous embodiment.

Referring to FIG. 12, the O-ring 100 may include a lower surface 111. In this case, the lower surface 111 may be the lower surface 111 of the first part 110. That is, a surface located at the lower portion among the surfaces constituting the first part 110 may correspond to the lower surface 111 of the O-ring 100. Here, referring to FIG. 7 again, the lower surface 111 of the O-ring 100 is configured to contact the beading portion 21 and/or the current collector 30. More specifically, the lower surface 111 of the O-ring 100 may be configured to contact the top surface of the beading portion 21 and/or the contact portion 33a of the housing coupling portion 33 of the current collector 30. That is, there is a structure in which the contact portion 33a of the current collector 30 is seated on the top surface of the beading portion 21, and in this case, the current collector 30 has a predetermined thickness, so that when the O-ring 100 is seated on the beading portion 21 and/or the current collector 30, a minute gap may exist between the O-ring 100 and the top surface of the beading portion 21. In this case, the size of the minute gap may be the same as the thickness of the current collector 30. That is, a minute gap may exist between the O-ring 100 and the beading portion 21, and there is a possibility that the electrolyte may leak through this gap. Meanwhile, the O-ring 100 has elasticity, and thus when the O-ring 100 is pressed in an upward and downward direction, the size of the gap may be reduced. However, since there is a possibility that the gap may not be completely eliminated, it is preferable that the bottom surface of the O-ring 100 is provided with at least one lower groove 113 so as to match the shape of the contact portion 33a of the current collector 30.

More specifically, referring to FIG. 12, the thickness of the first part 110 may repeatedly increase and decrease in an alternating manner along the circumferential direction. For example, the bottom surface of the first part 110 may be provided with a groove G at a predetermined interval along the circumferential direction. Preferably, the groove G may be configured to match the shape of the current collector 30. That is, the bottom surface of the first part 110 is provided with at least one lower groove 113 dug upward. For example, in an embodiment, when the contact portion 33a of the current collector 30 is provided in four, the lower groove 113 provided on the bottom surface of the O-ring 100 may also be provided in four. In this case, it is preferable that the shape of the contact portion 33a and the shape of the lower groove 113 of the O-ring 100 match each other. For example, the contact portion 33a of the current collector 30 may have an arc shape in which at least a portion thereof extends in the circumferential direction along the beading portion 21 of the battery housing 20. Accordingly, the extension length of the contact portion 33a in the circumferential direction may be formed longer than the width of the connecting portion 33b. As another embodiment, the contact portion 33a may have an arc shape extending in opposite directions along the circumferential direction on the beading portion 21 from the intersection point of the connecting portion 33b and the contact portion 33a. However, the number or shape of the contact portion 33a of the current collector 30 or the number or shape of the lower groove 113 of the O-ring 100 are not limited to this embodiment. That is, if the shape of the contact portion 33a and the shape of the lower groove 113 of the O-ring 100 match each other, it can be said to be included in the scope of the present disclosure.

According to the above configuration, the formation of a gap between the O-ring 100 and the beading portion 21 may be prevented. That is, the O-ring 100 may seal the battery housing 20 more effectively. Accordingly, the possibility of electrolyte leakage may be further reduced. Additionally, it is possible to create an environment in which the internal pressure of the battery housing 20 may be maintained constant.

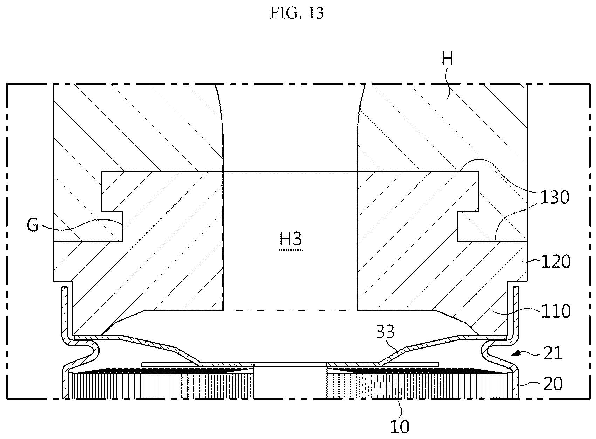

FIG. 13 is a view for describing an O-ring 100 according to still another embodiment of the present disclosure.

Since the O-ring 100 according to this embodiment is similar to the O-ring 100 of the previous embodiment, redundant descriptions of configurations that are substantially the same as or similar to the previous embodiment will be omitted, and the following description will focus on differences from the previous embodiment.

Referring to FIG. 13, the O-ring 100 does not include a groove G on the inside. The O-ring 100 may include a groove G on the outside. For example, only the injection hole H3 for injection is provided in the center of the O-ring 100 shown in FIG. 13, and a groove G for inserting a hopper H is not provided. Instead, a groove G for inserting a hopper H may be provided on the outer surface of the O-ring 100. In this way, a groove G may be provided on the outside or the inside of the O-ring 100, and depending on the shape of the groove G, a hopper H may also be coupled to the outside or the inside of the O-ring 100. That is, the position where the groove G is provided is not limited, and as long as a hopper H may be mounted on the groove G and the hopper H is in a form capable of compressing the O-ring 100, it will be said to be included in the scope of the present disclosure.

The present disclosure has been hereinabove described with regard to a limited number of embodiments and drawings, but the present disclosure is not limited thereto and various modifications and variations will be possible by those having ordinary skill in the technical field pertaining to the present disclosure within the technical aspect of the present disclosure and the scope of the appended claims and their equivalents.

## Claims

1. An O-ring comprising:
a first part seated on a beading portion into which a battery housing is recessed inward; and
a second part provided above the first part and configured to cover a top end surface of the battery housing.

2. The O-ring according to claim 1,
wherein the first part is configured in a cylindrical shape.

3. The O-ring according to claim 1, having elasticity.

4. The O-ring according to claim 1, comprising
at least one of NBR, VMQ, FKM, and FPM.

5. The O-ring according to claim 1, comprising
an injection hole perforated in an upward and downward direction in the center.

6. The O-ring according to claim 1, having
a groove into which a hopper capable of pressing the O-ring may be fitted.

7. The O-ring according to claim 1,
wherein the outer surface of the first part is configured to be spaced apart from the inner surface of the battery housing by a predetermined distance.

8. The O-ring according to claim 1,
wherein the outer surface of the first part is configured to be spaced apart from the inner surface of the battery housing by 0.2 to 0.8 mm.

9. The O-ring according to claim 1,
wherein the bottom surface of the second part is configured to be spaced apart from the top end surface of the battery housing by a predetermined distance.

10. The O-ring according to claim 1, comprising
a pressing surface provided on the inside or the outside of the O-ring and configured to be pressed downward by the hopper.

11. The O-ring according to claim 10,
wherein when the pressing surface is pressed downward, the first part is configured to increase in width in a radial direction as it is compressed in an upward and downward direction.

12. The O-ring according to claim 10,
wherein when the pressing surface is pressed downward, the second part is configured to move downward and contact the top end surface of the battery housing.

13. The O-ring according to claim 1,
wherein when pressure is applied from the outside of the battery housing toward the beading portion of the battery housing, the O-ring is configured to block the outside and the inside of the battery housing.

14. The O-ring according to claim 1,
wherein the thickness of the first part repeatedly increases and decreases in an alternating manner along the circumferential direction.
